# FASCICULE DE BREVET EUROPEEN

(11) **EP 4 389 478 B1**
(45) Date de publication et mention de la délivrance du brevet: **20.08.2025**
(21) Numéro de dépôt: 23215183.7
(22) Date de dépôt: 08.12.2023
(51) Int. Cl.: B60H 1/34

(54) **AERATEUR POUR HABITACLE DE VEHICULE AUTOMOBILE**
LUFTAUSSTRÖMER FÜR EINEN FAHRGASTRAUM EINES KRAFTFAHRZEUGS
AIR VENT FOR A MOTOR VEHICLE PASSENGER COMPARTMENT

(30) Priorité: 22.12.2022 FR 2214245
(43) Date de publication de la demande: 26.06.2024
(73) Titulaire: NOVARES France, 78140 Vélizy-Villacoublay (FR)
(72) Inventeur: HAMKE, Peter, 32584 LÖHNE (DE); KIEL, Michael, 32584 LÖHNE (DE)
(74) Mandataire: Germain Maureau

(56) Documents cités:
- EP-A1- 3 981 623
- DE-B3- 102014 105 273
- JP-A- H0 952 519

## Description

Les aérateurs servent à alimenter en air frais ou en air chaud l'habitacle d'un véhicule automobile. Ils sont généralement situés sur le tableau de bord et peuvent être commandés manuellement de manière à obtenir le flux d'air souhaité. L'utilisateur peut en général régler le débit d'air, la température de l'air ou la direction du flux d'air au moyen de boutons ou curseurs présents sur une console centrale, ou un élément de planche de bord ou sur l'aérateur lui-même. Ce type d'aérateurs à commande manuelle présente toutefois l'inconvénient de nécessiter une action systématique d'un opérateur si le débit d'air, la température de l'air et/ou la direction du flux d'air doit être modifiée. Or, dans le cas où l'opérateur est le conducteur lui-même, cela peut entrainer des erreurs d'inattention de sa part qui peuvent être dangereuses et aboutir, dans certains cas, à des accidents graves.

A cet effet, certains véhicules automobiles sont parfois équipés d'aérateurs à commande motorisée, dans lesquels le flux d'air à la sortie de l'aérateur suit une trajectoire définie à l'avance. Cette trajectoire est en général optimisée pour conférer un meilleur confort de conduite pour le conducteur et les passagers du véhicule.

Généralement, les aérateurs à commande motorisée nécessitent deux moteurs pour réaliser un contrôle régulé du déplacement de deux rangées d'ailettes de guidage d'air pivotant respectivement autour d'axes de pivotement vertical et horizontal. L'utilisation de deux moteurs génèrent toutefois des coûts élévés de fabrication et nécessitent une énergie électrique suffisante pour leur fonctionnement. Il est par ailleurs décrit dans les documents DE 10 2014 105273 B3, JP H09 52519 A et EP 3 981 623 A1 des aérateurs à commande motorisée conformes au préambule de la revendication 1.

L'invention vise donc à proposer un aérateur pour habitacle de véhicule automobile ne présentant pas les inconvénients précités. En particulier, l'invention vise à proposer un aérateur pour habitacle de véhicule automobile à commande motorisée générant des coûts de fabrication moindres et consommant moins d'énergie électrique durant son fonctionnement.

A cet effet, l'invention concerne un aérateur pour habitacle de véhicule automobile selon la revendication indépendante 1. Des modes de réalisation préférés de la présente invention sont décrits dans les revendications dépendantes annexées.

Ainsi configuré, l'aérateur pour habitacle de véhicule automobile selon l'invention permet de contrôler le déplacement de deux séries d'éléments de guidage d'air pivotant respectivement autour d'axes de pivotement vertical et horizontal au moyen d'un unique moteur, réduisant ainsi le coût de fabrication et la consommation énergétique d'un tel aérateur.

Selon d'autres caractéristiques, l'aérateur selon l'invention comporte une ou pluieurs des caractéristiques optionnelles suivantes considérées seules ou en combinaison :
- les premiers éléments de guidage d'air sont constitués par une pluralité de premières ailettes de guidage d'air disposées de manière sensiblement parallèle entre elles et écartées les unes des autres, chacune desdites premières ailettes de guidage d'air étant montée pivotante sur le boîtier de telle sorte à pouvoir pivoter autour d'un axe de pivotement horizontal, lesdites premières ailettes de guidage d'air étant solidarisées les unes aux autres au moyen d'un premier élément de liaison déplaçable verticalement.
- l'organe de manœuvre est muni sur une face d'extrémité inférieure d'une deuxième rainure de guidage destinée à recevoir de manière coulissante une tige verticale solidaire d'un des deuxièmes éléments de guidage d'air, ladite deuxième rainure de guidage étant configurée pour provoquer un déplacement de la tige verticale selon une direction transversale perpendiculaire à la direction longitudinale lors de la rotation de l'organe de manœuvre.
- les deuxièmes éléments de guidage d'air sont constitués par une pluralité de deuxièmes ailettes de guidage d'air disposées de manière sensiblement parallèle entre elles et écartées les unes des autres, chacune desdites deuxièmes ailettes de guidage d'air étant montée pivotante sur le boîtier de telle sorte à pouvoir pivoter autour d'un axe de pivotement vertical, lesdites deuxièmes ailettes de guidage d'air étant solidarisées les unes aux autres au moyen d'un deuxième élément de liaison déplaçable horizontalement.
- une portion annulaire supérieure de l'organe de manœuvre est munie de dents destinées à coopérer avec les dents correspondantes d'une roue dentée mue en rotation directement ou via un engrenage par un axe de sortie du moteur.
- le boîtier est muni d'un élément de détection destiné à coopérer avec un élément de détection complémentaire solidaire de l'organe de manœuvre lorsque les premiers et deuxièmes éléments de guidage d'air sont orientés selon une orientation de référence.
- dans l'orientation de référence des premiers et deuxièmes éléments de guidage d'air, le flux d'air est dirigé selon une direction de sortie horizontale, parallèlement à la direction longitudinale.
- l'aérateur comprend en outre une unité de commande apte à contrôler le moteur de manière à induire un mouvement aller-retour de l'organe de manœuvre depuis une position de départ, dans laquelle les premiers et deuxièmes éléments de guidage d'air sont orientés selon l'orientation de référence, jusqu'à une position extrême, dans laquelle l'organe de manœuvre s'est déplacé d'un angle prédéfini par rapport à sa position de départ.

L'invention concerne également un véhicule automobile comprenant un aérateur tel que défini précédemment.

L'invention sera davantage comprise à la lecture de la description non limitative qui va suivre, faite en référence aux figures ci-annexées.
[Fig. 1] est une vue en perspective d'un aérateur selon l'invention.
[Fig. 2] est une vue en perspective éclatée de l'aérateur de la figure 1.
[Fig. 3] est une vue latérale de l'aérateur de la figure 1.
[Fig. 4a] est une vue latérale de l'organe de manœuvre et des premiers éléments de guidage de l'aérateur de la figure 1, dans une première position fonctionnelle de l'aérateur.
[Fig. 4b] est une vue de face de l'organe de manœuvre et des premier et deuxième leviers de transmission de l'aérateur de la figure 1, dans la première position fonctionnelle de l'aérateur.
[Fig. 5a] est une vue similaire à la figure 4a, l'aérateur étant dans une deuxième position fonctionnelle.
[Fig. 5b] est une vue similaire à la figure 4b, l'aérateur étant dans la deuxième position fonctionnelle.
[Fig. 6a] est une vue similaire à la figure 4a, l'aérateur étant dans une troisième position fonctionnelle.
[Fig. 6b] est une vue similaire à la figure 4b, l'aérateur étant dans la troisième position fonctionnelle.
[Fig. 7a] est une vue de dessus de l'organe de manœuvre et des deuxièmes éléments de guidage d'air de l'aérateur de la figure 1, l'aérateur étant dans la première position fonctionnelle.
[Fig. 7b] est une vue similaire à la figure 7a, l'aérateur étant dans la deuxième position fonctionnelle.
[Fig. 7c] est une vue similaire à la figure 7a, l'aérateur étant dans la troisième position fonctionnelle.
[Fig. 8] est une vue en perspective et de dessous d'une variante de réalisation de l'organe de manœuvre.

Dans les paragraphes suivants, les termes horizontal, vertical, haut, bas, avant et arrière, gauche et droite font référence à des orientations de flux d'air pour un aérateur installé face au siège avant conducteur d'un habitacle de véhicule automobile. Ainsi, un flux d'air sortant d'un tel aérateur sera dirigé vers l'avant et vers le haut si le conducteur désire ventiler préférentiellement sa tête, et vers la droite s'il désire ventiler préférentiellement la partie gauche de son visage. Les termes avant/arrière, et gauche/droite font donc référence dans ce cas à des orientations contraires à celles de l'orientation normale du véhicule.

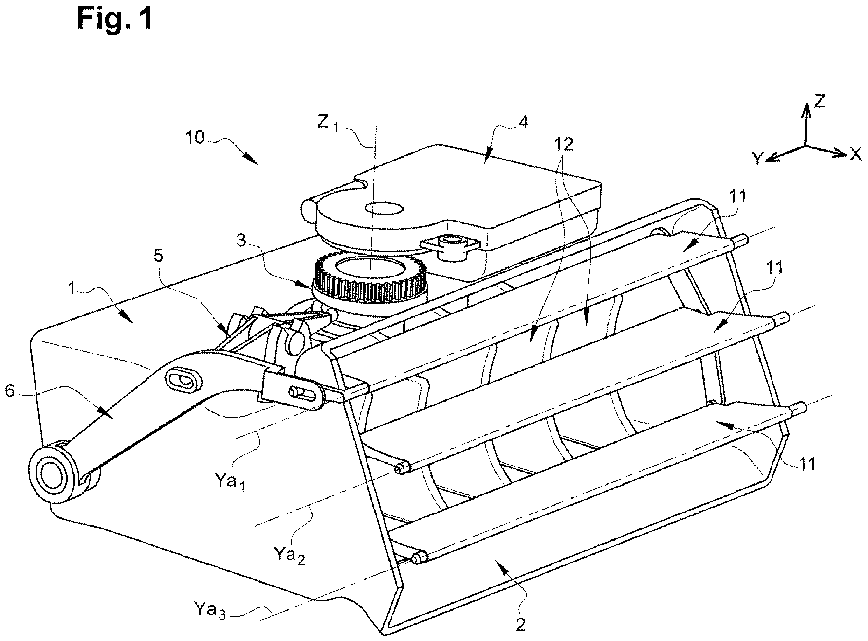

En référence aux figures 1 à 3, il est représenté un aérateur 10 conforme à l'invention. Cet aérateur 10 comprend un boîtier 1 relié sur sa face arrière à une conduite (non représentée) alimentant en air l'aérateur. Le boîtier 1 s'étend le long d'une direction longitudinale alignée sur la direction avant/arrière X du véhicule. Le boîtier 1 est muni sur sa face avant d'une ouverture de sortie 2 à travers laquelle peut s'échapper le flux d'air circulant à travers l'aérateur.

Comme illustré sur la figure 1, l'aérateur 10 possède, au niveau de l'ouverture de sortie 2, un premier groupe de trois ailettes de guidage d'air 11. Chacune des ailettes 11 est sensiblement plane et possède une forme sensiblement rectangulaire. Les ailettes 11 sont montées de manière pivotante sur le boîtier 1 de telle sorte qu'elles pivotent autour d'axes de pivotement horizontaux, respectivement Ya1, Ya2 et Ya3, qui sont alignés avec une direction transversale Y du véhicule. Les ailettes 11 sont en outre reliées de manière pivotante à un élément de liaison 13 au niveau d'un bord d'extrémité 111 s'étendant parallèlement à la direction X. L'élément de liaison 13 possède une orientation sensiblement verticale. Ainsi reliées ensemble, les ailettes 11 sont disposées de manière sensiblement parallèle entre elles et sont espacées les unes des autres dans le sens vertical. Au moyen d'organes de déplacement décrits en détail dans les paragraphes qui suivent, il est possible de faire bouger l'ensemble formé par les ailettes 11 et par l'élément de liaison 13 de telle sorte à modifier l'orientation des ailettes 11 par rapport à un plan horizontal. De ce fait, le flux d'air traversant l'ouverture de sortie 2 et circulant entre les ailettes 11 pourra ainsi être dirigé de plusieurs manières en fonction de l'orientation des ailettes 11.

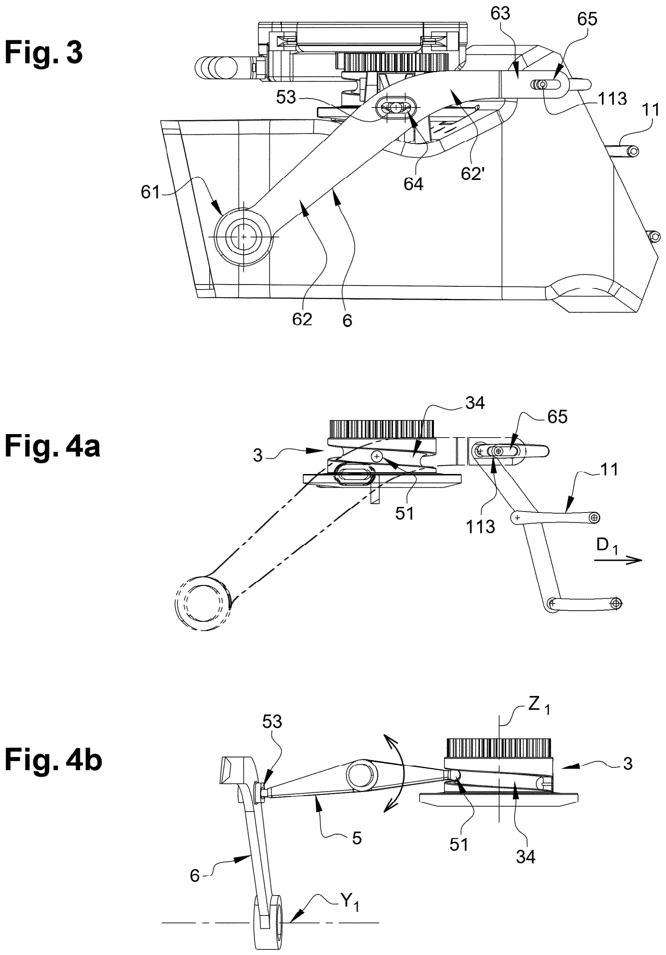

Une des manières possibles est représentée sur la figure 4a. Dans cette configuration, les ailettes 11 sont disposées horizontalement: le flux d'air à la sortie de l'aérateur est donc parallèle à une direction D1 qui est sensiblement horizontale.

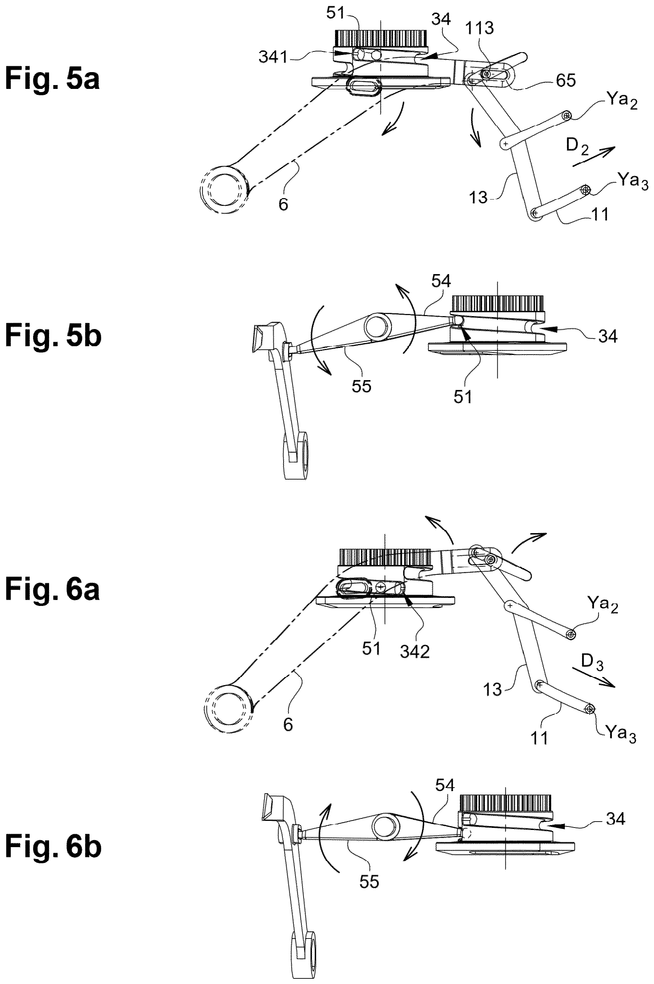

Une autre manière possible est représentée sur la figure 5a. Dans cette configuration, les ailettes 11 sont orientées vers le bas depuis leur axe de pivotement respectif: le flux d'air à la sortie de l'aérateur est donc parallèle à une direction D2 qui est orientée vers le haut.

Une autre manière possible est représentée sur la figure 6a. Dans cette configuration, les ailettes 11 sont orientées vers le haut depuis leur axe de pivotement respectif: le flux d'air à la sortie de l'aérateur est donc parallèle à une direction D3 qui est orientée vers le bas.

Comme représenté sur les figures 1, 2 et 7a, l'aérateur 10 possède en outre, au niveau de l'ouverture de sortie 2 et en amont du premier groupe des ailettes 11, un deuxième groupe de cinq ailettes de guidage d'air 12. Chacune des ailettes 12 est sensiblement plane et possède une forme sensiblement parallélépipédique. Les ailettes 12 sont montées de manière pivotante sur le boîtier 1 de telle sorte qu'elles pivotent autour d'axes de pivotement verticaux, respectivement Za1, Za2, Za3, Za4 et Za5, qui sont alignés avec une direction verticale Z du véhicule. Les ailettes 12 sont en outre reliées de manière pivotante à un élément de liaison 14 au niveau d'un bord d'extrémité arrière 121. L'élément de liaison 14 possède une orientation sensiblement horizontale. Ainsi reliées ensemble, les ailettes 12 sont disposées de manière sensiblement parallèle entre elles et sont espacées les unes des autres dans le sens horizontal. Au moyen d'organes de déplacement décrits en détail dans les paragraphes qui suivent, il est possible de faire bouger l'ensemble formé par les ailettes 12 et par l'élément de liaison 14 de telle sorte à modifier l'orientation des ailettes 12 par rapport à un plan vertical. De ce fait, le flux d'air traversant l'ouverture de sortie 2 et circulant entre les ailettes 12 pourra ainsi être dirigé de plusieurs manières en fonction de l'orientation des ailettes 12.

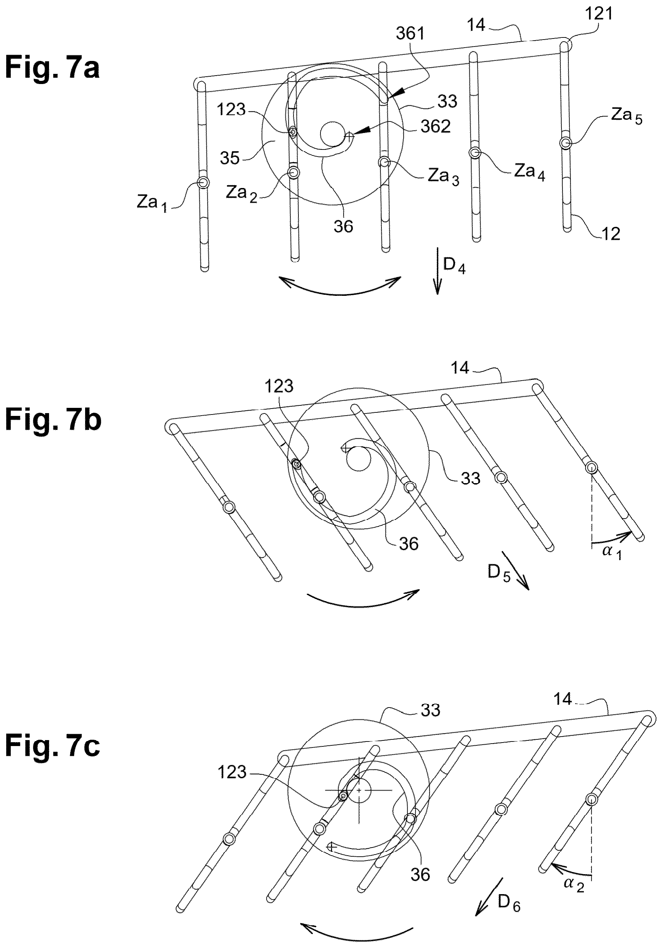

Une des manières possibles est représentée sur la figure 7a. Dans cette configuration, les ailettes 12 sont alignées verticalement avec la direction X: le flux d'air à la sortie de l'aérateur est donc parallèle à une direction D4 qui est verticale et alignée avec la direction X.

Une autre manière possible est représentée sur la figure 7b. Dans cette configuration, les ailettes 12 sont orientées vers la gauche depuis leur extrémité arrière 121 respective: le flux d'air à la sortie de l'aérateur est donc parallèle à une direction D5 qui est orientée vers la gauche par rapport à la direction X.

Une autre manière possible est représentée sur la figure 7c. Dans cette configuration, les ailettes 12 sont orientées vers la droite depuis leur extrémité arrière 121 respective: le flux d'air à la sortie de l'aérateur est donc parallèle à une direction D6 qui est orientée vers la droite par rapport à la direction X.

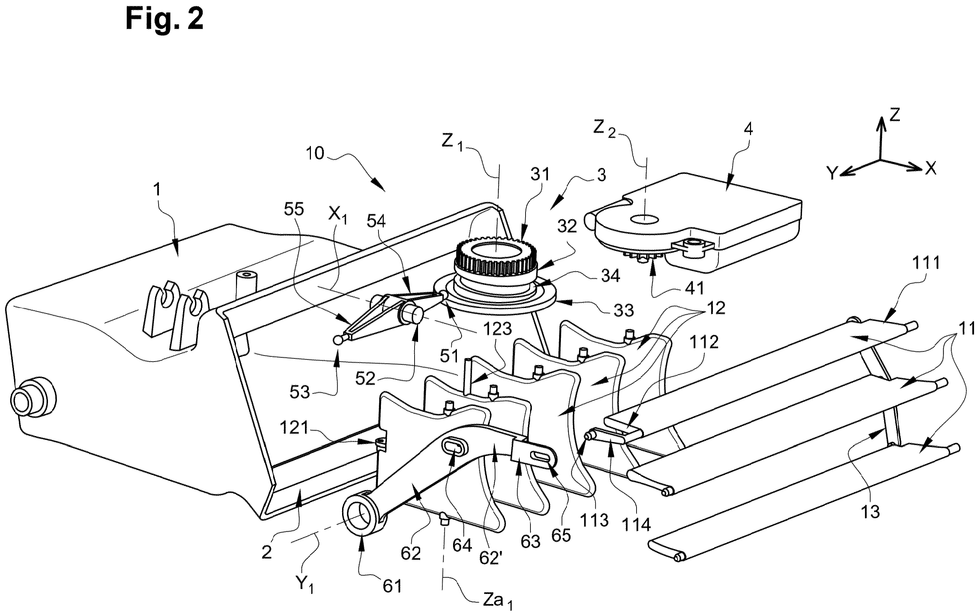

L'orientation des ailettes 11 et 12 s'opère au moyen de plusieurs organes de déplacement actionnables par un unique moteur 4. Ce moteur 4 est configuré pour induire un mouvement de rotation autour d'un axe vertical Z1 à un organe de manœuvre 3. Comme représenté sur la figure 2, cet organe de manœuvre 3 possède notamment une portion annulaire supérieure 31 qui est munie de dents destinées à coopérer avec les dents correspondantes d'une roue dentée 41 mue en rotation directement ou via un engrenage par un axe de sortie du moteur 4. Comme représenté sur la figure 2, le moteur 4 est configuré pour faire tourner la roue dentée 41 autour d'un axe vertical Z2.

L'organe de manœuvre 3 possède une forme sensiblement cylindrique et est notamment muni, le long de son pourtour cylindrique externe, d'une première rainure de guidage 34 possédant une forme globalement hélicoïdale le long de l'axe Z1. Cette rainure de guidage 34 est configurée pour agir sur un premier levier de transmission 5, lequel coopère avec un deuxième levier de transmission 6, ledit deuxième levier de transmission 6 agissant à son tour sur l'une des ailettes de guidage d'air 11. Comme représenté sur la figure 2, le premier levier de transmission 5 comprenant deux bras, respectivement un bras gauche 54 et un bras droit 55, possédant une forme de prisme droit à base triangulaire, lesdits bras 54, 55 étant disposés de part et d'autre d'un axe pivot central 52 qui est aligné selon la direction longitudinale X. l'axe pivot 52 est relié de manière pivotante au boîtier 1 de telle sorte que le premier levier de transmission 3 peut pivoter autour d'un axe longitudinal X1. Chacun des bras 54, 55 présente une extrémité libre, respectivement une extrémité gauche 51 pour le bras gauche 54 et une extrémité droite 53 pour le bras droit 55. L'extrémité gauche 51 est reçue de manière coulissante dans la rainure de guidage 34 de l'organe de manœuvre 3 de sorte que, lors de la rotation de l'organe de manœuvre 3, la rainure de guidage 34 est configurée pour provoquer un déplacement vertical de ladite extrémité gauche 51. Ce déplacement vertical génère, par voie de conséquence, un déplacement vertical en sens opposé de l'extrémité droite 53. Par ailleurs, le deuxième levier de transmission 6 se présente sous la forme d'un bras sensiblement plat possédant un segment arrière 62 et un segment avant 62' formant un coude. Le segment arrière 62 est relié de manière pivotante au boîtier 1 autour d'un axe transversal Y1 au niveau d'une extrémité arrière 61 et le segment avant 62' est muni, au niveau d'une extrémité avant 63, d'une ouverture oblongue 65. Comme représenté sur la figure 3, cette ouverture oblongue 65 est destinée à recevoir de manière coulissante une tige horizontale 113 qui est solidaire d'une des ailettes de guidage d'air 11. En particulier, la tige horizontale 113 fait partie intégrante d'une extension 114 en forme d'équerre dépassant d'un bord d'extrémité droit 112 de l'ailette 11. Le deuxième levier de transmission est par ailleurs muni, au niveau de la portion centrale située entre le segment arrière 62 et le segment avant 62', d'une ouverture oblongue 64 alignée selon la direction transversale Y. Comme représenté sur la figure 3, cette ouverture oblongue 64 est destinée à recevoir de manière coulissante l'extrémité droite 53 du premier levier de transmission 5. Lors de déplacement vertical de l'extrémité droite 53, sous l'action de l'organe de manœuvre 3 comme décrit précédemment, le deuxième levier de transmission 6 va donc subir une poussée vers le haut ou vers le bas du fait de l'appui de ladite extrémité droite 53 sur les parois périphériques internes entourant l'ouverture oblongue 64. Cette poussée vers le haut ou vers le bas va générer un pivotement du deuxième levier de transmission 6 au niveau de son extrémité arrière 61 autour de l'axe Y1. Ce pivotement va provoquer un déplacement vers le haut ou vers le bas de l'extrémité avant 65 du deuxième levier de transmission 6. La tige horizontale 113, qui est engagée dans l'ouverture oblongue 65, va donc, par voie de conséquence, subir un déplacement vers le haut ou vers le bas lors du pivotement du deuxième levier de transmission 6. Etant donné que la tige horizontale 113 est solidaire de l'une des ailettes de guidage d'air 11, elle va induire, lors de son déplacement vers le haut ou vers le bas, un déplacement pivotant de ladite ailette 11 autour de son axe de pivotement Ya1 soit dans le sens horaire, soit dans le sens antihoraire. Ce déplacement pivotant de l'ailette 11 est transmis simultanément aux autres ailettes 11 par l'intermédiaire de l'élément de liaison 13.

En référence aux figures 4a, 4b, 5a, 5b, 6a, et 6b, il est représenté l'aérateur de l'invention selon plusieurs positions spécifiques des ailettes de guidage d'air 11.

Dans la position représentée sur les figures 4a et 4b, les ailettes 11 sont alignées dans un plan horizontal, le flux d'air à la sortie de l'aérateur étant dirigé selon la direction D1. Cette position est atteinte lorsque l'extrémité gauche 51 du premier levier de transmission 5 est engagée dans une zone médiane de la rainure de guidage 34 de l'organe de manœuvre 3. Cette zone médiane pourra par exemple se situer à mi-distance entre une extrémité haute 341, représentée sur la figure 5a, de la rainure de guidage 34, et une extrémité basse 342, représentée sur la figure 6a, de la rainure de guidage 34. Par convention, la position représentée sur les figures 4a, 4b sera dénommée « position de départ » dans les paragraphes qui suivent.

Dans la position représentée sur les figures 5a et 5b, les ailettes 11 sont orientées vers le bas depuis leur axe de pivotement respectif, le flux d'air à la sortie de l'aérateur étant dirigé vers le haut selon la direction D2. Cette position est atteinte lorsque l'extrémité gauche 51 du premier levier de transmission 5 est engagée dans une zone de la rainure de guidage 34 de l'organe de manœuvre 3 qui est proche de l'extrémité haute 341. Par convention, la position représentée sur les figures 5a, 5b sera dénommée « position limite haute » dans les paragraphes qui suivent. Des flèches ont été ajoutées sur les figures 5a et 5b pour indiquer les déplacements effectués par les premier et deuxième leviers de transmission 5, 6 et par l'élément de liaison 13 lors du transfert de la position de départ à la position limite haute.

Dans la position représentée sur les figures 6a et 6b, les ailettes 11 sont orientées vers le haut depuis leur axe de pivotement respectif, le flux d'air à la sortie de l'aérateur étant dirigé vers le bas selon la direction D3. Cette position est atteinte lorsque l'extrémité gauche 51 du premier levier de transmission 5 est engagée dans une zone de la rainure de guidage 34 de l'organe de manœuvre 3 qui est proche de l'extrémité basse 342. Par convention, la position représentée sur les figures 6a, 6b sera dénommée « position limite basse » dans les paragraphes qui suivent. Des flèches ont été ajoutées sur les figures 6a et 6b pour indiquer les déplacements effectués par les premier et deuxième leviers de transmission 5, 6 et par l'élément de liaison 13 lors du transfert de la position de départ à la position limite basse.

Dans la pratique, il sera avantageux que l'aérateur 10 passe successivement et de manière ininterrompue de la position de départ à la position limite haute, de la position limite haute à la position limite basse, puis de la position limite basse à la position de départ. Ce cycle de déplacement pourra être exécutée de manière automatisée au moyen du moteur 4 et d'une unité de commande (non représentée) apte à contrôler le moteur 4 de manière à induire un mouvement aller-retour de l'organe de manœuvre 3 depuis la position de départ jusqu'à l'une des positions limite haute ou basse. Ce mouvement aller-retour correspondra à une rotation de l'organe de manœuvre 3 d'un angle prédéfini depuis la position de départ. Cet angle prédéfini pourra notamment être compris entre 135° et 180°, et, de préférence, être égal à 150°. A cette fin, il sera envisageable d'équiper le boitier 1 d'un capteur apte à détecter lorsque l'organe de manœuvre 3 est dans la position de départ. L'unité de commande pourra ensuite, en fonction de la vitesse du moteur et du temps écoulé depuis la réception d'un signal en provenance du capteur indiquant le passage à la position de départ, déterminer lorsque l'organe de manœuvre 3 aura effectué une rotation de l'angle prédéfini, correspondant au passage à la position limite haute ou basse. Une inversion du sens de rotation du moteur sera ensuite commandée par l'unité de commande de manière à revenir à la position de départ.

Comme représenté sur la figure 2, l'organe de manœuvre 3 comporte en outre une extrémité inférieure 33 en forme de disque. Cette extrémité inférieure 33 est représentée sur la figure 7a en vue de dessus et en transparence de manière à ce que sa face inférieure 35 soit visible. Cette face inférieure 35 est notamment munie d'une deuxième rainure de guidage 36 possédant une forme sensiblement en spirale centrée sur l'axe Z1. Cette face inférieure 35 est positionnée à l'aplomb d'une des ailettes de guidage d'air 12, ladite ailette 12 étant munie d'une tige verticale 123 qui est reçue dans la deuxième rainure de guidage 36. Cette rainure de guidage 36 est configurée pour agir sur la tige verticale 123 de manière à induire un déplacement horizontal vers la gauche ou vers la droite de ladite tige. Ce déplacement horizontal génère, par voie de conséquence, un déplacement pivotant de l'ailette 12 comportant ladite tige 123 autour de son axe de pivotement Za2 soit dans le sens horaire, soit dans le sens antihoraire. Ce déplacement pivotant de l'ailette 12 est transmis simultanément aux autres ailettes 12 par l'intermédiaire de l'élément de liaison 14.

En référence aux figures 7a, 7b et 7c, il est représenté l'aérateur de l'invention selon plusieurs positions spécifiques des ailettes de guidage d'air 12.

Dans la position représentée sur la figure 7a, les ailettes 12 sont alignées verticalement selon la direction X, le flux d'air à la sortie de l'aérateur étant dirigé selon la direction D4. Cette position est atteinte lorsque la tige 123 est engagée dans une zone médiane de la rainure de guidage 36 de l'organe de manœuvre 3. Cette zone médiane pourra par exemple se situer à mi-distance entre une extrémité distale 361 de la rainure de guidage 36, qui est éloignée de l'axe Z1, et une extrémité proximale 362 de la rainure de guidage 34, qui est proche de l'axe Z1. La position représentée sur la figure 7a pourra avantageusement correspondre à la position de départ mentionnée dans les paragraphes précédents.

Dans la position représentée sur la figure 7b, les ailettes 12 sont inclinées vers la gauche par rapport à la direction X, le flux d'air à la sortie de l'aérateur étant dirigé vers la gauche selon la direction D5. Dans cette position, les ailettes 12 forment un angle α1 avec la direction X. Cette position est atteinte lorsque la tige 123 est positionnée dans la rainure de guidage 36 de l'organe de manœuvre 3 au niveau de l'extrémité distale 361. Par convention, la position représentée sur la figure 7b sera dénommée « position limite gauche » dans les paragraphes qui suivent. Une flèche a été ajoutée sur la figure 7b pour indiquer le déplacement effectué par les ailettes 12 lors du transfert de la position de départ à la position limite gauche.

Dans la position représentée sur la figure 7c, les ailettes 12 sont inclinées vers la droite par rapport à la direction X, le flux d'air à la sortie de l'aérateur étant dirigé vers la droite selon la direction D6. Dans cette position, les ailettes 12 forment un angle α2 avec la direction X. Cette position est atteinte lorsque la tige 123 est positionnée dans la rainure de guidage 36 de l'organe de manœuvre 3 au niveau de l'extrémité proximale 362. Par convention, la position représentée sur la figure 7c sera dénommée « position limite droite » dans les paragraphes qui suivent. Une flèche a été ajoutée sur la figure 7c pour indiquer le déplacement effectué par les ailettes 12 lors du transfert de la position de départ à la position limite droite.

L'organe de manœuvre 3 pourra être configuré pour que les positions limite gauche et droite correspondent respectivement aux positions limite haute et basse mentionnées précédemment, de sorte que, lors d'un cycle complet de déplacement de l'organe de manœuvre 3, le flux d'air à la sortie de l'aérateur soit orienté successivement horizontalement et au centre, puis vers le haut et vers la gauche, puis, à nouveau horizontalement et au centre, puis, vers le bas et vers la droite, et, finalement, à nouveau horizontalement et au centre.

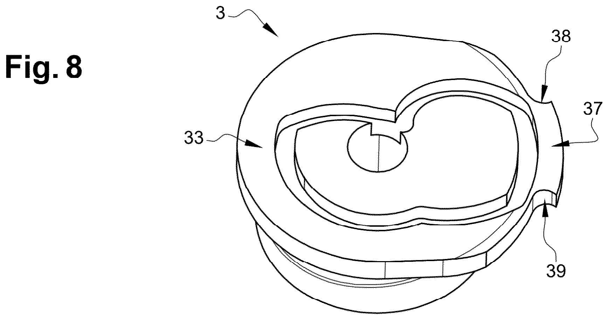

En référence à la figure 8, il est représenté une variante de réalisation de l'organe de manœuvre 3. Dans cette variante, l'extrémité inférieure 33 est munie d'une excroissance radiale 37, laquelle est définie par deux bords d'extrémité 38 et 39. Ces bords d'extrémité 38 et 39 sont configurés pour venir en butée contre au moins un élément de structure (non représenté) du boîtier 1 lorsque les positions limite gauche et/ou droite, et/ou la position de départ de l'organe de manœuvre 3 sont atteintes. Lors d'un contact de l'un desdits bords d'extrémité 38, 39 avec ledit élément de structure, le moteur électrique 4 va générer une augmentation de l'appel de courant (ou de puissance) qui sera détectée par l'unité de commande. L'unité de commande en déduira ainsi la position angulaire de l'organe de manœuvre 3 par rapport à sa position de départ et pourra alors piloter précisément la rotation de l'organe de manœuvre 3 au moyen du moteur 4 de manière à modifier l'orientation des ailettes de guidage 11 et 12 en fonction de la demande de l'utilisateur.

L'invention n'est évidemment pas limitée au mode de réalisation spécifique décrit ci-dessus.

En particulier, les orientations successives du flux d'air à la sortie de l'aérateur pourront évidemment varier en fonction du profil des première et deuxième rainures de guidage 34 et 36 et s'adapter à l'emplacement d'installation dans le tableau de bord et de la position assise du conducteur et du passager.

Il est clair également que le nombre et la forme des ailettes de guidage d'air 11, 12 pourra également varier. Il sera également envisageable d'utiliser d'autres moyens de guidage d'air en lieu et place des ailettes 11, 12.

Par ailleurs, le mouvement rotatif de l'organe de manœuvre 3 pourra être transmis par le moteur 4 par tout moyen possible, l'utilisation d'une partie annulaire dentée 31 étant l'un des moyens possibles.

## Revendications

1. Aérateur (10) pour habitacle de véhicule automobile comprenant :
- un boîtier (1) s'étendant le long d'une direction longitudinale (X) et possédant au moins une ouverture de sortie (2) à travers laquelle circule un flux d'air,
- des moyens (11, 12) de guidage d'air aptes à orienter le flux d'air selon au moins une direction de sortie (D1-D6), les moyens (11, 12) de guidage d'air comprenant une pluralité de premiers éléments (11) de guidage d'air montés mobiles en rotation sur le boîtier (1) autour d'axes de pivotement horizontaux (Ya) et aptes à orienter le flux d'air selon une direction de sortie parmi au moins trois directions de sortie (D1-D3) différentes, à savoir une direction de sortie (D1) horizontale, une direction de sortie (D2) inclinée vers le haut, et une direction de sortie (D3) inclinée vers le bas, et une pluralité de deuxièmes éléments (12) de guidage d'air montés mobiles en rotation sur le boîtier (1) autour d'axes de pivotement verticaux (Za) et aptes à orienter le flux d'air selon une direction de sortie parmi au moins trois directions de sortie (D4-D6) différentes, à savoir une direction de sortie (D4) orientée au centre, parallèlement à la direction longitudinale (X), une direction de sortie (D5) inclinée vers la gauche par rapport à la direction longitudinale (X), une direction de sortie (D6) inclinée vers la droite par rapport à la direction longitudinale (X), et, ce, pour chacune des positions des premiers éléments (11) de guidage d'air,
- des moyens de déplacement (3-6) aptes à déplacer les moyens (11, 12) de guidage d'air,
dans lequel les moyens de déplacement (3-6) comprennent un organe de manœuvre (3) déplaçable de manière rotative autour d'un axe vertical (Z1) sous l'action d'un moteur (4), ledit organe de manœuvre (3) étant apte à agir simultanément sur les premiers éléments (11) de guidage d'air par l'intermédiaire de moyens de transmission (5, 6) de manière à induire une série de déplacements desdits premiers éléments (11) de guidage d'air et sur les deuxièmes éléments (12) de guidage d'air de manière à induire une série de déplacements desdits deuxièmes éléments (12) de guidage d'air, et ledit organe de manœuvre (3) possède une forme cylindrique et est muni, le long de son pourtour cylindrique externe, d'une première rainure de guidage (34) **caractérisé en ce que** les moyens de transmission (5, 6) comprennent un premier levier (5) relié de manière pivotante au boîtier (1) autour d'un axe pivot (52) central aligné selon la direction longitudinale (X), ledit premier levier (5) comprenant deux bras (54, 55) disposés de part et d'autre de l'axe pivot (52), respectivement un bras gauche (54) et un bras droit (55), et un deuxième levier (6) relié de manière pivotante au boîtier (1) autour d'un axe transversal (Y1) au niveau d'une extrémité arrière (61), ledit deuxième levier (6) étant muni, au niveau d'une extrémité avant (63), d'une première ouverture oblongue (65) destinée à recevoir de manière coulissante une tige horizontale (113) solidaire d'un des premiers éléments (11) de guidage d'air et, au niveau d'une portion centrale, d'une deuxième ouverture oblongue (64) destinée à recevoir de manière coulissante une extrémité libre (53) du bras droit (55) du premier levier (5), et **en ce que** ladite première rainure de guidage (34) est destinée à recevoir de manière coulissante une extrémité libre (51) du bras gauche (54) du premier levier (5), ladite première rainure de guidage (34) étant configurée pour provoquer un déplacement vertical de ladite extrémité libre (51) du bras gauche (54) lors de la rotation de l'organe de manœuvre (3).

2. Aérateur (10) selon la revendication 1, **caractérisé en ce que** les premiers éléments de guidage d'air sont constitués par une pluralité de premières ailettes (11) de guidage d'air disposées de manière sensiblement parallèle entre elles et écartées les unes des autres, chacune desdites premières ailettes (11) de guidage d'air étant montée pivotante sur le boîtier (1) de telle sorte à pouvoir pivoter autour d'un axe de pivotement horizontal (Ya1, Ya2, Ya3), lesdites premières ailettes (11) de guidage d'air étant solidarisées les unes aux autres au moyen d'un premier élément de liaison (13) déplaçable verticalement.

3. Aérateur (10) selon l'une des revendications précédentes, **caractérisé en ce que** l'organe de manœuvre (3) est muni sur une face d'extrémité inférieure (35) d'une deuxième rainure de guidage (36) destinée à recevoir de manière coulissante une tige verticale (123) solidaire d'un des deuxièmes éléments (12) de guidage d'air, ladite deuxième rainure de guidage (36) étant configurée pour provoquer un déplacement de la tige verticale (123) selon une direction transversale (Y) perpendiculaire à la direction longitudinale (X) lors de la rotation de l'organe de manœuvre (3).

4. Aérateur (10) selon la revendication 3, **caractérisé en ce que** les deuxièmes éléments de guidage d'air sont constitués par une pluralité de deuxièmes ailettes (12) de guidage d'air disposées de manière sensiblement parallèle entre elles et écartées les unes des autres, chacune desdites deuxièmes ailettes (12) de guidage d'air étant montée pivotante sur le boîtier (1) de telle sorte à pouvoir pivoter autour d'un axe de pivotement vertical (Za1, Za2, Za3, Za4, Za5), lesdites deuxièmes ailettes (12) de guidage d'air étant solidarisées les unes aux autres au moyen d'un deuxième élément de liaison (14) déplaçable horizontalement.

5. Aérateur (10) selon l'une des revendications précédentes, **caractérisé en ce qu'**une portion annulaire supérieure (31) de l'organe de manœuvre (3) est munie de dents destinées à coopérer avec les dents correspondantes d'une roue dentée (41) mue en rotation directement ou via un engrenage par un axe de sortie du moteur (4).

6. Aérateur (10) selon l'une des revendications précédentes, **caractérisé en ce que** le boîtier (1) est muni d'un élément de détection destiné à coopérer avec un élément de détection complémentaire solidaire de l'organe de manœuvre (3) lorsque les premiers et deuxièmes éléments (11, 12) de guidage d'air sont orientés selon une orientation de référence.

7. Aérateur (10) selon la revendication 6, **caractérisé en ce que**, dans l'orientation de référence des premiers et deuxièmes éléments (11, 12) de guidage d'air, le flux d'air est dirigé selon une direction de sortie (D1, D4) horizontale, parallèlement à la direction longitudinale (X).

8. Aérateur (10) selon la revendication 6 ou 7, **caractérisé en ce qu'**il comprend en outre une unité de commande apte à contrôler le moteur (4) de manière à induire un mouvement aller-retour de l'organe de manœuvre (3) depuis une position de départ, dans laquelle les premiers et deuxièmes éléments (11, 12) de guidage d'air sont orientés selon l'orientation de référence, jusqu'à une position extrême, dans laquelle l'organe de manœuvre (3) s'est déplacé d'un angle prédéfini par rapport à sa position de départ.

9. Véhicule automobile comprenant un aérateur (10) selon l'une des revendications précédentes.

## Patentansprüche

1. Belüftungsvorrichtung (10) für einen Fahrgastraum eines Kraftfahrzeugs, umfassend:
- ein Gehäuse (1), das sich entlang einer Längsrichtung (x) erstreckt und mindestens eine Austrittsöffnung (2) besitzt, durch die ein Luftstrom strömt,
- Luftführungsmittel (11, 12), die geeignet sind, den Luftstrom in mindestens eine Austrittsrichtung (D1-D6) auszurichten, wobei die Luftführungsmittel (11, 12) eine Vielzahl von ersten Luftführungselementen (11), die am Gehäuse (1) um horizontale Schwenkachsen (Ya) drehbeweglich montiert und geeignet sind, den Luftstrom in eine Austrittsrichtung von mindestens drei verschiedenen Austrittsrichtungen (D1-D3) auszurichten, nämlich einer horizontalen Austrittsrichtung (D1), einer nach oben geneigten Austrittsrichtung (D2) und einer nach unten geneigten Austrittsrichtung (D3), und eine Vielzahl von zweiten Luftführungselementen (12) umfassen, die am Gehäuse (1) um vertikale Schwenkachsen (Za) drehbeweglich montiert und geeignet sind, den Luftstrom in eine Austrittsrichtung von mindestens drei verschiedenen Austrittsrichtungen (D4-D6) auszurichten, nämlich einer mittig, parallel zur Längsrichtung (X) ausgerichteten Austrittsrichtung (D4), einer zur Längsrichtung (X) nach links geneigten Austrittsrichtung (D5), einer zur Längsrichtung (X) nach rechts geneigten Austrittsrichtung (D6), und zwar für jede der Positionen der ersten Luftführungselemente (11),
- Verschiebemittel (3-6), die geeignet sind, die Luftführungsmittel (11, 12) zu verschieben,
wobei die Verschiebemittel (3-6) ein Betätigungselement (3) umfassen, das unter der Wirkung eines Motors (4) um eine vertikale Achse (Z1) drehbar verschoben werden kann, wobei das Betätigungselement (3) geeignet ist, gleichzeitig über Übertragungsmittel (5, 6) auf die ersten Luftführungselemente (11) zu wirken, um eine Reihe von Verschiebungen der ersten Luftführungselemente (11) herbeizuführen, und auf die zweiten Luftführungselemente (12), um eine Reihe von Verschiebungen der zweiten Luftführungselemente (12) herbeizuführen, und das Betätigungselement (3) eine zylindrische Form besitzt und entlang seines äußeren zylindrischen Umfangs mit einer ersten Führungsnut (34) versehen ist
**dadurch gekennzeichnet, dass** die Übertragungsmittel (5, 6) einen ersten Hebel (5), der schwenkbar mit dem Gehäuse (1) um eine in Längsrichtung (X) ausgerichtete zentrale Drehachse (52) verbunden ist, wobei der erste Hebel (5) zwei Arme (54, 55) umfasst, die auf beiden Seiten der Schwenkachse (52) angeordnet sind, jeweils einen linken Arm (54) und einen rechten Arm (55), und einen zweiten Hebel (6) umfassen, der an einem hinteren Ende (61) schwenkbar mit dem Gehäuse (1) um eine Querachse (Y1) verbunden ist, wobei der zweite Hebel (6) an einem vorderen Ende (63) mit einer ersten länglichen Öffnung (65), die dazu bestimmt ist, einen horizontalen Stab (113) gleitend aufzunehmen, der fest mit einem der ersten Luftführungselemente (11) verbunden ist, und an einem mittleren Abschnitt mit einer zweiten länglichen Öffnung (64) versehen ist, die dazu bestimmt ist, ein freies Ende (53) des rechten Arms (55) des ersten Hebels (5) gleitend aufzunehmen, und dass die erste Führungsnut (34) dazu bestimmt ist, ein freies Ende (51) des linken Arms (54) des ersten Hebels (5) gleitend aufzunehmen, wobei die erste Führungsnut (34) so eingerichtet ist, dass sie eine vertikale Verschiebung des freien Endes (51) des linken Arms (54) bei der Drehung des Betätigungselements (3) bewirkt.

2. Belüftungsvorrichtung (10) nach Anspruch 1, **dadurch gekennzeichnet, dass** die ersten Luftführungselemente aus einer Vielzahl von ersten Luftführungsrippen (11) bestehen, die im Wesentlichen parallel zueinander und voneinander beabstandet angeordnet sind, wobei jede der ersten Luftführungsrippen (11) schwenkbar an dem Gehäuse (1) montiert ist, so dass sie um eine horizontale Schwenkachse (Ya1, Ya2, Ya3) schwenken kann, wobei die ersten Luftführungsrippen (11) durch ein erstes vertikal verschiebbares Verbindungselement (13) fest miteinander verbunden sind.

3. Belüftungsvorrichtung (10) nach einem der vorhergehenden Ansprüche, **dadurch gekennzeichnet, dass** das Betätigungselement (3) auf einer unteren Endfläche (35) mit einer zweiten Führungsnut (36) versehen ist, die dazu bestimmt ist, einen vertikalen Stab (123), der fest mit einem der zweiten Luftführungselemente (12) verbunden ist, gleitend aufzunehmen, wobei die zweite Führungsnut (36) so eingerichtet ist, dass sie eine Bewegung des vertikalen Stabs (123) in einer Querrichtung (Y) senkrecht zur Längsrichtung (X) beim Drehen des Betätigungselements (3) bewirkt.

4. Belüftungsvorrichtung (10) nach Anspruch 3, **dadurch gekennzeichnet, dass** die zweiten Luftführungselemente aus einer Vielzahl von zweiten Luftführungsrippen (12) bestehen, die im Wesentlichen parallel zueinander und voneinander beabstandet angeordnet sind, wobei jede der zweiten Luftführungsrippen (12) schwenkbar an dem Gehäuse (1) montiert ist, so dass sie um eine vertikale Schwenkachse (Za1, Za2, Za3, Za4, Za5) schwenken kann, wobei die zweiten Luftführungsrippen (12) durch ein zweites horizontal verschiebbares Verbindungselement (14) fest miteinander verbunden sind.

5. Belüftungsvorrichtung (10) nach einem der vorhergehenden Ansprüche, **dadurch gekennzeichnet, dass** ein oberer ringförmiger Abschnitt (31) des Betätigungselements (3) mit Zähnen versehen ist, die dazu bestimmt sind, mit den entsprechenden Zähnen eines Zahnrads (41) zusammenzuarbeiten, das direkt oder über ein Getriebe durch eine Abtriebswelle des Motors (4) in Drehung versetzt wird.

6. Belüftungsvorrichtung (10) nach einem der vorhergehenden Ansprüche, **dadurch gekennzeichnet, dass** das Gehäuse (1) mit einem Detektionselement versehen ist, das dazu bestimmt ist, mit einem komplementären Detektionselement zusammenzuarbeiten, das fest mit dem Betätigungselement (3) verbunden ist, wenn das erste und das zweite Luftführungselement (11, 12) gemäß einer Referenzausrichtung ausgerichtet sind.

7. Belüftungsvorrichtung (10) nach Anspruch 6, **dadurch gekennzeichnet, dass** der Luftstrom in der Referenzausrichtung des ersten und des zweiten Luftführungselements (11, 12) in einer horizontalen, parallel zur Längsrichtung (X) verlaufenden Austrittsrichtung (D1, D4) geleitet wird.

8. Belüftungsvorrichtung (10) nach Anspruch 6 oder 7, **dadurch gekennzeichnet, dass** sie ferner eine Steuereinheit umfasst, die geeignet ist, den Motor (4) so zu steuern, dass sie eine Hin- und Herbewegung des Betätigungselements (3) von einer Ausgangsposition, in der die ersten und zweiten Luftführungselemente (11, 12) gemäß der Referenzausrichtung ausgerichtet sind, bis zu einer Endposition, in der sich das Betätigungselement (3) um einen vordefinierten Winkel gegenüber seiner Ausgangsposition verschoben hat, herbeiführt.

9. Kraftfahrzeug, das eine Belüftungsvorrichtung (10) nach einem der vorhergehenden Ansprüche umfasst.

## Claims

1. An air vent (10) for a motor vehicle passenger compartment comprising:
- a case (1) extending along a longitudinal direction (X) and having at least one outlet opening (2) through which an air flow circulates,
- air guide means (11, 12) capable of orienting the air flow in at least one outlet direction (D1-D6), the air guide means (11, 12) comprising a plurality of first air guide elements (11) movably mounted in rotation on the case (1) about horizontal pivotal axes (Ya) and capable of orienting the air flow in an outlet direction among at least three different outlet directions (D1-D3), namely a horizontal outlet direction (D1), an upwardly inclined outlet direction (D2), and a downwardly inclined outlet direction (D3), and a plurality of second air guide elements (12) movably mounted in rotation on the case (1) about vertical pivotal axes (Za) and capable of orienting the air flow in an outlet direction among at least three different outlet directions (D4-D6), namely an outlet direction (D4) oriented centrally, parallel to the longitudinal direction (X), an outlet direction (D5) inclined to the left with respect to the longitudinal direction (X), an outlet direction (D6) inclined to the right with respect to the longitudinal direction (X), and this, for each of the positions of the first air guide elements (11),
- displacement means (3-6) capable of moving the air guide means (11, 12),
wherein the displacement means (3-6) comprise a maneuvering member (3) rotatably movable about a vertical axis (Z1) under the action of a motor (4), said maneuvering member (3) being capable of acting simultaneously on the first air guide elements (11) via transmission means (5, 6) so as to induce a series of displacements of said first air guide elements (11) and on the second air guide elements (12) so as to induce a series of displacements of said second air guide elements (12), and said maneuvering member (3) has a cylindrical shape and is provided, along its external cylindrical periphery, with a first guide groove (34), **characterized in that** the transmission means (5, 6) comprise a first lever (5) pivotally connected to the case (1) about a central pivot axis (52) aligned in the longitudinal direction (X), said first lever (5) comprising two arms (54, 55) disposed on either side of the pivot axis (52), respectively a left arm (54) and a right arm (55), and a second lever (6) pivotally connected to the case (1) about a transverse axis (Y1) at a rear end (61), said second lever (6) being provided, at a front end (63), with a first oblong opening (65) intended to slidably receive a horizontal rod (113) secured to one of the first air guide elements (11) and, at a central portion, with a second oblong opening (64) intended to slidably receive a free end (53) of the right arm (55) of the first lever (5), and **in that** said first guide groove (34) is intended to slidably receive a free end (51) of the left arm (54) of the first lever (5), said first guide groove (34) being configured to cause a vertical displacement of said free end (51) of the left arm (54) during rotation of the maneuvering member (3).

2. The air vent (10) according to claim 1, **characterized in that** the first air guide elements consist of a plurality of first air guide fins (11) disposed substantially parallel to each other and spaced apart from each other, each of said first air guide fins (11) being pivotally mounted on the case (1) so as to be able to pivot about a horizontal pivotal axis (Ya1, Ya2, Ya3), said first air guide fins (11) being secured to each other by means of a first vertically movable connecting element (13).

3. The air vent (10) according to any of the preceding claims, **characterized in that** the maneuvering member (3) is provided on a lower end face (35) with a second guide groove (36) intended to slidably receive a vertical rod (123) secured to one of the second air guide elements (12), said second guide groove (36) being configured to cause a displacement of the vertical rod (123) in a transverse direction (Y) perpendicular to the longitudinal direction (X) during rotation of the maneuvering member (3).

4. The air vent (10) according to claim 3, **characterized in that** the second air guide elements consist of a plurality of second air guide fins (12) disposed substantially parallel to each other and spaced apart from each other, each of said second air guide fins (12) being pivotally mounted on the case (1) so as to be able to pivot about a vertical pivotal axis (Za1, Za2, Za3, Za4, Za5), said second air guide fins (12) being secured to each other by means of a second horizontally movable connecting element (14).

5. The air vent (10) according to any of the preceding claims, **characterized in that** an upper annular portion (31) of the maneuvering member (3) is provided with teeth intended to cooperate with the corresponding teeth of a gear wheel (41) rotated directly or via a gear by an output shaft of the motor (4).

6. The air vent (10) according to any of the preceding claims, **characterized in that** the case (1) is provided with a detection element intended to cooperate with a complementary detection element secured to the maneuvering member (3) when the first and second air guide elements (11, 12) are oriented in a reference orientation.

7. The air vent (10) according to claim 6, **characterized in that**, in the reference orientation of the first and second air guide elements (11, 12), the air flow is directed in a horizontal outlet direction (D1, D4), parallel to the longitudinal direction (X).

8. The air vent (10) according to claim 6 or 7, **characterized in that** it further comprises a controller capable of controlling the motor (4) so as to induce a back- and-forth movement of the maneuvering member (3) from a starting position, in which the first and second air guide elements (11, 12) are oriented in the reference orientation, to an extreme position, in which the maneuvering member (3) has moved by a predefined angle relative to its starting position.

9. A motor vehicle comprising an air vent (10) according to any of the preceding claims.
